# EUROPEAN PATENT SPECIFICATION

(11) **EP 4 227 362 B1**
(45) Date of publication and mention of the grant of the patent: **19.02.2025**
(21) Application number: 21877471.9
(22) Date of filing: 30.09.2021
(51) Int. Cl.: C08L 25/04, C08L 35/00, C08L 101/00

(54) **HEAT-RESISTANT RESIN COMPOSITION**
HITZEBESTÄNDIGE HARZZUSAMMENSETZUNG
COMPOSITION DE RÉSINE RÉSISTANTE À LA CHALEUR

(30) Priority: 07.10.2020 JP 2020170081
(43) Date of publication of application: 16.08.2023
(73) Proprietor: Denka Company Limited, Tokyo 103-8338 (JP)
(72) Inventor: NISHINO, Kohei, Tokyo 103-8338 (JP); ENDO, Masamichi, Tokyo 103-8338 (JP)
(74) Representative: Gulde & Partner
(86) International application number: PCT/JP2021/036090
(87) International publication number: WO 2022/075170

(56) References cited:
- EP-A1- 4 174 098
- EP-A1- 4 212 584
- WO-A1-2008/026554
- WO-A1-2010/082617
- WO-A1-2016/186133
- JP-A- 2004 323 772
- JP-A- 2004 346 148
- JP-A- 2005 298 774
- JP-A- 2005 298 776
- JP-A- H0 741 624
- JP-A- H07 157 624
- JP-A- H09 143 319
- JP-A- H1 135 760
- US-A1- 2018 298 184

## Description

### Technical Field

The present invention relates to a heat resistant resin composition with excellent flowability and impact resistance while having heat resistance.

### Background Art

An ABS resin is a thermoplastic resin which contains acrylonitrile, butadiene, and styrene as its main component. Due to its superior mechanical strength, appearance, chemical resistance, molding property and the like, the ABS resin is used in a wide variety of applications including automobiles, home appliances, office automation equipment, housing materials, and daily necessities. On the other hand, in applications which require heat resistance such as exterior and interior materials for automobiles, heat resistance may be insufficient. As a technique for improving the heat resistance, the following can be mentioned. For example, a maleimide-based copolymer, an α-methyl styrene-based copolymer and the like are used. Heat resistances of the heat resistant ABS resins formulated with the maleimide-based copolymer, the α-methylstyrene-based copolymer or the like have been improved (see Patent Literatures 1 to 3 for example). For example, Patent Literature 4 discloses a rubber modified vinyl-based graft copolymer having a core-shell structure in which a shell is formed by graft-polymerizing a monomer mixture to a core comprising a rubbery polymer, wherein the monomer mixture comprises: an aromatic monomer comprising an α-substituted aromatic vinyl-based monomer represented and an aromatic vinyl-based monomer excluding the α-substituted aromatic vinyl-based monomer; a cyanovinyl-based monomer; and a maleimide-based monomer. Patent Literature 5 describes a heat resistant resin composition, including: a maleimide-based copolymer (A); and at least one resin (B) selected from the group including: ABS resin, ASA resin, AES resin, and SAN resin. Patent Literature 6 relates to a resin composition containing 5-40% by mass of a maleimide copolymer, 30-75% by mass of a vinyl copolymer containing an aromatic vinyl monomer residue and a vinyl cyanide monomer residue, and having a weight average molecular weight of 100,000-160,000, and 10-50% by mass of a graft copolymer obtained by graft-copolymerizing a monomer mixture containing an aromatic vinyl monomer and a vinyl cyanide monomer to a rubbery polymer. Patent Literature discloses a heat-resistant resin composition comprising a maleimide-based copolymer (A) and a resin (B), and the amount of a volatile component is less than 500 µg/g, wherein the resin (B) is at least one resin selected from ABS resin, ASA resin, AES resin, SAN resin.

### Citation List

### Patent Literature

[Patent Literature 1] JP 2005-298774 A
[Patent Literature 2] JP 2005-298776 A
[Patent Literature 3] WO 2008/026554 A1
[Patent Literature 4] US 2018/298184 A1
[Patent Literature 5] EP 4 212 584 Al
[Patent Literature 6] WO 2008/026554 Al
[Patent Literature 7] WO 2016/186133 Al

### Summary of Invention

### Technical Problem

The present invention provides a heat resistant resin composition with excellent flowability and impact resistance while having heat resistance.

### Solution to Problem

(1) A heat resistant resin composition containing a maleimide-based copolymer (A) and at least one resin (B) selected from among an ABS resin, an ASA resin, an AES resin and a SAN resin, wherein a weight average molecular weight of a MEK-soluble component contained in the heat resistant resin composition is 80000 to 120000, a maleimide-based monomer unit contained in 100 mass% of the MEK-soluble component is 7 to 16 mass%, an amount of a gel component contained in 100 mass% of the heat resistant resin composition is 15 to 24 mass%; the resin (B) contains at least the ABS resin and the SAN resin; and more than 20 mass% and 27 mass% or less of the ABS resin, 56 to 69 mass% of the SAN resin, and 10 to 27 mass% of the maleimide-based copolymer (A) are contained in 100 mass% of the heat resistant resin composition.
(2) The heat resistant resin composition of (1), wherein a melt mass flow rate measured at 220°C and with a load of 98 N is 15 g/10 min or higher.
(3) The heat resistant resin composition of (1) or (2), wherein a Vicat softening temperature, measured in accordance with JIS K7206, is 110°C or higher.
(4) The heat resistant resin composition of any one of (1) to (3), wherein the resin (B) contains at least the SAN resin, a weight average molecular weight of the SAN resin is 90000 to 120000, and a weight average molecular weight of the maleimide-based copolymer (A) is 80000 to 105000.
(5) An injection-molded article formed from the heat resistant resin composition of any one of (1) to (4).

### Advantageous Effects of Invention

The heat resistant resin composition of the present invention has excellent flowability and impact resistance while having heat resistance, and therefore can be used for injection molding of a large, complex or thin-walled molded article. In addition, because of its heat resistance, it can be used for exterior and interior materials for automobiles.

### Description of Embodiments

### <Explanation of Terms>

In the present specification, the phrase "A to B" means A or more and B or less.

Hereinafter, the embodiments of the present invention will be described in detail. The following embodiments can be combined with each other.

The heat resistant resin composition contains a maleimide-based copolymer (A) and at least one resin (B) selected from among an ABS resin, an ASA resin, an AES resin, and a SAN resin.

The maleimide-based copolymer (A) is a copolymer having a maleimide-based monomer unit and a styrene-based monomer unit. In the present invention, it can further have an acrylonitrile-based monomer unit and an unsaturated dicarboxylic anhydride-based monomer unit.

Examples of the maleimide-based monomer unit include N-alkyl maleimides such as N-methyl maleimide, N-butyl maleimide, and N-cyclohexyl maleimide; N-phenyl maleimide; N-chlorophenyl maleimide; N-methylphenyl maleimide; N-methoxyphenyl maleimide; and N-tribromophenyl maleimide. Among these, N-phenyl maleimide is preferable. These maleimide-based monomer units may be used alone, or two or more of these may be used in combination. The maleimide-based monomer unit can be obtained by using a raw material including a maleimide-based monomer. Otherwise, a raw material including unsaturated dicarboxylic monomer unit can be imidized using ammonia or primary amine.

The maleimide-based copolymer (A) preferably contains 35 to 70 mass% of the maleimide-based monomer unit, more preferably 45 to 60 mass% of the maleimide-based monomer unit with respect to 100 mass% of the maleimide-based copolymer (A). The content of the maleimide-based monomer unit is, specifically for example, 35, 36, 37, 38, 39, 40, 45, 46, 47, 48, 49, 50, 55, 60, or 70 mass%, and may be in the range between the two values exemplified herein. When the content of the maleimide-based monomer unit is within such a range, compatibility with at least one resin (B) selected from the group consisting of the ABS resin, the ASA resin, the AES resin, and the SAN resin described later is improved, and thus the impact strength of the resin composition becomes superior. The content of the maleimide-based monomer unit is a value measured by 13C-NMR.

Examples of the styrene-based monomer unit include styrene, o-methyl styrene, m-methyl styrene, p-methyl styrene, 2,4-dimethyl styrene, ethyl styrene, p-tert-butyl styrene, α-methyl styrene, and α-methyl-p-methyl styrene. Among these, styrene is preferable. These styrene-based monomer units may be used alone, or two or more of these may be used in combination.

The maleimide-based copolymer (A) preferably contains 20 to 60 mass% of the styrene-based monomer unit, more preferably 35 to 55 mass% of the styrene-based monomer unit with respect to 100 mass% of the maleimide-based copolymer (A). The content of the styrene-based monomer unit is, specifically for example, 20, 30, 40, 45, 46, 47, 48, 49, 50, 51, 52, 53, 54, 55, or 60 mass%, and may be in the range between the two values exemplified herein. When the content of the styrene-based monomer unit is within such a range, compatibility with at least one resin (B) selected from the group consisting of the ABS resin, the ASA resin, the AES resin, and the SAN resin described later is improved, and thus the impact strength of the resin composition becomes superior. The content of the styrene-based monomer unit is a value measured by 13C-NMR.

The acrylonitrile-based monomer unit is, for example, acrylonitrile, methacrylonitrile, ethacrylonitrile, and fumaronitrile. Among these, acrylonitrile is preferable. These acrylonitrile-based monomer units may be used alone, or two or more of these may be used in combination.

The maleimide-based copolymer (A) preferably contains 0 to 20 mass% of acrylonitrile-based monomer unit, more preferably 0 to 15 mass% of acrylonitrile-based monomer unit with respect to 100 mass% of the maleimide-based copolymer (A). The content of the acrylonitrile-based monomer unit is, specifically for example, 0, 5, 6, 7, 8, 9, 10, 15, or 20 mass%, and may be in the range between the two values exemplified herein. When the content of the acrylonitrile-based monomer unit is within such a range, the chemical resistance of the resin composition becomes superior. The content of the acrylonitrile-based monomer unit is a value measured by 13C-NMR.

Examples of the unsaturated dicarboxylic anhydride-based monomer unit include maleic anhydride, itaconic anhydride, citraconic anhydride, and aconitic anhydride. Among these, maleic anhydride is preferable. These unsaturated dicarboxylic anhydride-based monomer units may be used alone, or two or more of these may be used in combination.

The maleimide-based copolymer (A) preferably contains 0 to 10 mass% of the unsaturated dicarboxylic anhydride-based monomer unit, more preferably 0 to 5 mass% of the unsaturated dicarboxylic anhydride-based monomer unit with respect to 100 mass% of the maleimide-based copolymer (A). The content of the unsaturated dicarboxylic anhydride-based monomer unit is, specifically for example, 0, 1, 2, 3, 4, 5, 6, 7, 8, 9, or 10 mass%, and may be in the range between the two values exemplified herein. When the content of the unsaturated dicarboxylic anhydride-based monomer unit is within such a range, thermal stability of the maleimide-based copolymer becomes superior. The content of the unsaturated dicarboxylic anhydride-based monomer unit is a value measured by a titration method.

The maleimide-based copolymer (A) according to one embodiment of the present invention preferably contains 35 to 70 mass% of the maleimide-based monomer unit, 20 to 60 mass% of the styrene-based monomer unit, 0 to 20 mass% of the acrylonitrile-based monomer unit, and 0 to 10 mass% of the unsaturated dicarboxylic anhydride-based monomer unit with respect to 100 mass% of the maleimide-based copolymer (A). More preferably, the maleimide-based copolymer (A) according to one embodiment of the present invention contains 45 to 60 mass% of the maleimide-based monomer unit, 35 to 55 mass% of the styrene-based monomer unit, 0 to 15 mass% of the acrylonitrile-based monomer unit, and 0 to 5 mass% of the unsaturated dicarboxylic anhydride-based monomer unit with respect to 100 mass% of the maleimide-based copolymer (A). When the content of the constituting unit is within such a range, the heat resistance imparting property and thermal stability of the maleimide-based copolymer (A) become superior. The maleimide-based monomer unit and the styrene-based monomer unit are values measured by 13C-NMR. The unsaturated dicarboxylic anhydride-based monomer unit is a value measured by a titration method.

In terms of efficiently improving the heat resistance of the heat resistant resin composition, the glass transition temperature (Tmg) of the maleimide-based copolymer (A) is preferably 175 to 205°C. The glass transition temperature is a value measured by DSC under the following measurement condition.
Name of instrument: Robot DSC 6200 made by Seiko Instruments Inc.
Temperature elevation rate: 10°C/min

The weight average molecular weight (Mw) of the maleimide-based copolymer (A) is preferably 60000 to 150000, more preferably 70000 to 120000, even more preferably 80000 to 105000. The weight average molecular weight is, specifically for example, 60000, 70000, 80000, 90000, 100000, 110000, 120000, 130000, 140000, or 150000, and may be in the range between the two values exemplified herein. When the weight average molecular weight (Mw) of the maleimide-based copolymer (A) is within such a range, the impact strength and flowability of the heat resistant resin composition become superior. To control the weight average molecular weight (Mw) of the maleimide-based copolymer (A), a polymerization temperature, a polymerization time, and an amount of polymerization initiator added can be adjusted. In addition, a solvent concentration and an amount of chain transfer agent added can also be adjusted. The weight average molecular weight of the maleimide-based copolymer (A) is a value of polystyrene equivalent measured by gel permeation chromatography (GPC), which is measured under the following condition.
Name of Instrument: SYSTEM-21 Shodex (made by Showa Denko K.K.)
Column: PL gel MIXED-B, 3 columns connected in series
Temperature: 40°C
Detection: differential refractive index
Eluent: tetrahydrofuran
Concentration: 2 mass%
Calibration Curve: prepared using standard polystyrene (PS) (made by Polymer Laboratories Ltd)

As a method for producing the maleimide-based copolymer (A), a known method can be adopted. For example, there is a method in which a monomer mixture including a styrene-based monomer, a maleimide-based monomer, an unsaturated dicarboxylic anhydride-based monomer, and other copolymerizable monomers is copolymerized. There is also a method in which a monomer mixture including the styrene-based monomer, the unsaturated dicarboxylic anhydride-based monomer, and other copolymerizable monomers is copolymerized, followed by imidization to allow a part of the unsaturated dicarboxylic anhydride-based monomer unit to react with ammonia or primary amine to convert the part of the unsaturated dicarboxylic anhydride-based monomer unit into the maleimide-based monomer unit (hereinafter referred to as "post-imidizing method").

Examples of the polymerization method of the maleimide-based copolymer (A) include solution polymerization and bulk polymerization. Solution polymerization is preferable from the viewpoint that the maleimide-based copolymer (A) with a more uniform copolymerization composition can be obtained by polymerizing while dividedly adding the monomer to be copolymerized or the like. The solvent for solution polymerization is preferably non-polymerizable from the viewpoint that the formation of byproduct and the adverse effect can be suppressed. Examples of the solvent include ketones such as acetone, methyl ethyl ketone, methyl isobutyl ketone, and acetophenone; ethers such as tetrahydrofuran, and 1,4-dioxiane; aromatic hydrocarbons such as benzene, toluene, xylene, and chlorobenzene; N,N-dimethylformamide; dimethyl sulfoxide; and N-methyl-2-pyrrolidone. In terms of easily removing the solvent during devolatilization and recovery of the maleimide-based copolymer (A), methyl ethyl ketone and methyl isobutyl ketone are preferable. As a polymerization process, a continuous polymerization process, a batch process (batch), and a semi-batch process are all applicable. The polymerization method is not particularly limited. Here, radical polymerization is preferable since high productivity can be achieved with a simple process.

In the solution polymerization or the bulk polymerization, a polymerization initiator and a chain transfer agent can be used, and the polymerization temperature is preferably in the range of 80 to 150°C. Examples of the polymerization initiator include azo compounds such as azobisisobutyronitrile, azobiscyclohexanecarbonitrile, azobismethylpropionitrile, and azobismethylbutyronitrile; and peroxides such as benzoyl peroxide, t-butyl peroxybenzoate, 1,1-di-(t-butyl peroxy)cyclohexane, t-butyl peroxy isopropyl monocarbonate, t-butyl peroxy-2-ethylhexanoate, di-t-butyl peroxide, dicumylperoxide, and ethyl-3,3-di-(t-butylperoxy)butyrate. These polymerization initiators may be used alone, or two or more of these may be used in combination. From the viewpoint of the polymerization reaction rate and controlling of the rate of conversion, azo compounds and organic peroxides having a 10 hour half-life of 70 to 120°C are preferable. The amount of the polymerization initiator used is not particularly limited. Here, the amount is preferably 0.1 to 1.5 mass%, more preferably 0.1 to 1.0 mass%, with respect to 100 mass% of the total monomer unit. When the amount of the polymerization initiator used is 0.1 mass% or more, it is preferable since the sufficient polymerization reaction rate can be achieved. When the amount of the polymerization initiator used is less than 1.5 mass%, the polymerization reaction rate can be suppressed, thereby allowing easy control of the reaction, resulting in obtaining the target molecular weight easily. Examples of the chain transfer agent include n-octyl mercaptan, n-dodecyl mercaptan, t-dodecyl mercaptan, α-methyl styrene dimer, ethyl thioglycolate, limonene, and terpinolene. The amount of the chain transfer agent used is not particularly limited, so long as it is in the range which allows to obtain the target molecular weight. Here, the amount of the chain transfer agent used is preferably 0.1 to 0.8 mass%, more preferably 0.15 to 0.5 mass%, with respect to 100 mass% of the total monomer unit. When the amount of the chain transfer agent used is 0.1 to 0.8 mass%, the target molecular weight can be obtained easily.

As a method for introducing the maleimide-based monomer unit of the maleimide-based copolymer (A), a method in which the maleimide-based monomer is copolymerized and a post-imidizing method can be mentioned. The post-imidizing method is preferable since the amount of the residual maleimide-based monomer in the maleimide-based copolymer (A) is less. The post-imidizing method is a method in which a monomer mixture including the styrene-based monomer, the unsaturated dicarboxylic anhydride-based monomer, and other copolymerizable monomers is copolymerized, followed by imidization to allow a part of the unsaturated dicarboxylic anhydride-based monomer unit to react with ammonia or primary amine to convert the part of the unsaturated dicarboxylic anhydride-based monomer unit into the maleimide-based monomer unit. Examples of the primary amine used in the post-imidizing method include alkyl amines such as methylamine, ethylamine, n-propylamine, iso-propylamine, n-butylamine, n-pentylamine, n-hexylamine, n-octylamine, cyclohexylamine, and decylamine; chloro- or bromo- substituted alkyl amines; and aromatic amines such as aniline, toluidine, naphthylamine. Among these, aniline is preferable. These primary amines can be used alone, or two or more of these may be used in combination. In the post-imidizing, a catalyst can be used to enhance the dehydration-ring-closing reaction during the reaction between the primary amine and the unsaturated dicarboxylic anhydride group. Examples of the catalyst include tertiary amines such as trimethylamine, triethylamine, tripropylamine, tributylamine, N,N-dimethylaniline, and N,N-diethylaniline. The temperature of the post-imidizing is preferably 100 to 250°C, more preferably 120 to 200°C. When the temperature of the imidizing reaction is 100°C or higher, the reaction rate is sufficiently high. Therefore, it is preferable in view of productivity. When the temperature of the imidizing reaction is 250°C or lower, it is preferable since deterioration of the physical property due to thermal degradation of the maleimide-based copolymer (A) can be suppressed.

As a method for removing volatile component (devolatilization method) such as the solvent used in the solution polymerization and the unreacted monomer from the solution after the solution polymerization or from the solution after the post-imidizing of the maleimide-based copolymer (A), a known method can be adopted. For example, a vacuum devolatilization tank equipped with a heater and a devolatilization extruder equipped with a vent can be used. The molten maleimide-based copolymer (A) after devolatilization is transferred to the pelletizing step. The molten copolymer is extruded into strands from a porous die, and processed into pellets by a cold cut method, an air-cooled hot cutting method or an underwater hot cutting method.

The resin (B) is selected from the group consisting of the ABS resin, the ASA resin, the AES resin, and the SAN resin. One of these may be used alone, or two or more of these may be used in combination.

The ABS resin, the ASA resin, and the AES resin are graft copolymers obtained by graft copolymerizing at least a styrene-based monomer and an acrylonitrile-based monomer to a rubbery polymer. For example, when a butadiene-based rubber such as a polybutadiene and a styrene-butadiene copolymer is used as the rubbery polymer, the resin is the ABS resin. When an acryl-based rubber including butyl acrylate or ethyl acrylate is used as the rubbery polymer, the resin is the ASA resin. When an ethylene-based rubber such as an ethylene-α-olefin copolymer is used as the rubbery polymer, the resin is the AES resin. Two or more of these rubbery polymers may be used in combination when graft copolymerization is performed.

As the production method of the graft copolymer such as the ABS resin, a known method can be adopted. For example, a production method performing emulsion polymerization or continuous bulk polymerization can be mentioned. The method which performs the emulsion polymerization is preferable since the content of the rubbery polymer in the final heat resistant resin composition can be adjusted easily.

As the production method of the graft copolymer which performs emulsion polymerization, a method in which the styrene-based monomer and the acrylonitrile-based monomer are emulsion-graft polymerized to a latex of a rubbery polymer can be mentioned (hereinafter referred to as "emulsion-graft polymerization method"). A latex of a graft copolymer can be obtained by the emulsion-graft polymerization method.

In the emulsion-graft polymerization method, water, an emulsifier, a polymerization initiator, and a chain transfer agent are used, and the polymerization temperature is preferably in the range of 30 to 90°C. Examples of the emulsifier include anionic surfactant, nonionic surfactant, and amphoteric surfactant. Examples of the polymerization initiator include organic peroxides such as cumene hydroperoxide, diisopropylbenzene peroxide, t-butyl peroxyacetate, t-hexyl peroxybenzoate, t-butyl peroxybenzoate; persulfates such as potassium persulfate and ammonium persulfate; azo-based compounds such as azobisbutyronitrile; reducing agents such as iron ion; secondary reducing agents such as sodium formaldehyde sulfoxylate; and chelating agents such as ethylenediaminetetraacetic acid disodium. Examples of the chain transfer agent include n-octyl mercaptan, n-dodecyl mercaptan, t-dodecyl mercaptan, α-methyl styrene dimer, ethyl thioglycolate, limonene, and terpinolene.

The latex of the graft copolymer can be solidified by a known method to collect the graft copolymer. For example, a solidifying agent is added to the latex of the graft copolymer to allow solidification, and then the graft copolymer is washed and dehydrated in a dehydrator followed by a drying step. Accordingly, a powdered graft copolymer is obtained.

In terms of impact resistance, the content of the rubbery polymer in the graft copolymer obtained by the emulsion-graft polymerization method is preferably 40 to 70 mass%, more preferably 45 to 65 mass%. The content of the rubbery polymer can be adjusted by, for example, the ratio of the styrene-based monomer and the acrylonitrile-based monomer used with respect to the rubbery polymer when performing the emulsion-graft polymerization.

In terms of impact resistance and chemical resistance, the constituting units other than the rubbery polymer of the graft copolymer obtained by the emulsion-graft polymerization method are preferably 65 to 85 mass% of the styrene-based monomer unit and 15 to 35 mass% of the acrylonitrile-based monomer unit.

The gel component of the graft copolymer is preferably in the form of particles. The gel component is a particle of a rubbery polymer obtained by graft copolymerizing a styrene-based monomer and an acrylonitrile-based monomer. The gel component is the component which is insoluble in an organic solvent such as methyl ethyl ketone (MEK) and toluene, and can be separated by centrifugal separation. In some cases, an occlusion structure is formed, in which the styrene-acrylonitrile-based copolymer is encapsulated in a particle shape inside the rubbery polymer particles. When the graft copolymer and the styrene-acrylonitrile-based copolymer are melt-blended, the gel component exists as a dispersed phase in the form of particles in the continuous phase of the styrene-acrylonitrile-based copolymer.

In terms of the impact resistance and appearance of the molded article, the volume average particle diameter of the gel component of the graft copolymer is preferably in the range of 0.10 to 1.00 µm, more preferably 0.15 to 0.50 µm. The volume average particle diameter is a value calculated as follows. Ultra-thin sections are cut out from the pellets of the resin composition obtained by melt-blending the graft copolymer and the styrene-acrylonitrile-based copolymer, and the cut-out sections were observed with a transmission electron microscope (TEM). An image analysis of particles dispersed in the continuous phase was performed and calculation was conducted to obtain the volume average particle diameter. The volume average particle diameter can be adjusted by the particle diameter of the latex of the rubbery polymer used in the emulsion-graft polymerization for example. The particle diameter of the latex of the rubbery polymer can be adjusted by the addition method of the emulsifier and the amount of water used in the emulsion polymerization. The conditions to achieve the preferable range would result in a long polymerization time and thus the productivity becomes low. Therefore, a method in which a rubbery polymer having a particle diameter of approximately 0.10 µm is polymerized in a short period of time and then the rubber particles are enlarged by a chemical aggregation method or a physical aggregation method can be mentioned.

The graft ratio of the graft copolymer is preferably 10 to 100 mass%, more preferably 20 to 70 mass% in terms of impact resistance. The graft ratio is a value calculated from the equation of "graft ratio (mass%) = [(G - RC)/RC] × 100" based on the amount of gel component (G) and the content of the rubbery polymer (RC). The graft ratio represents the amount of the styrene-acrylonitrile-based copolymer the particles of the rubbery polymer contain per unit mass of the rubbery polymer, the styrene-acrylonitrile-based copolymer either encapsulated by the particles or graft-bonded. The graft ratio can be adjusted by, for example, the ratio of the monomer and the rubbery polymer, the kind and amount of the initiator, the amount of the chain transfer agent, the amount of emulsifier, the polymerization temperature, the feeding method (lump / multistage / continuous), the addition rate of monomer and the like during the emulsion-graft polymerization.

The degree of toluene swelling of the graft copolymer is preferably 5 to 20 times from the viewpoint of the impact resistance and appearance of the molded article. The degree of toluene swelling represents the degree of crosslinking of the particles of the rubbery polymer, and is calculated as follows. The graft copolymer is dissolved in toluene, insoluble component is separated by centrifugation or filtration, and the value of the degree of toluene swelling is calculated from the ratio of the mass in a state of being swollen with toluene and the mass in a dry state where toluene is removed by vacuum drying. The degree of toluene swelling is, for example, influenced by the degree of crosslinking of the rubbery polymer used in the emulsion graft polymerization, and can be adjusted by the initiator, the emulsifier, the polymerization temperature, and the addition of the polyfunctional monomer such as divinylbenzene during the emulsion polymerization of the rubbery polymer.

The SAN resin is a copolymer including the styrene-based monomer unit and the acrylonitrile-based monomer unit, such as the styrene-acrylonitrile-based copolymer.

As other copolymerizable monomers of the SAN resin, (meth) acrylic acid ester-based monomers such as methyl methacrylate; acrylic ester-based monomers such as butyl acrylate and ethyl acrylate; (meth)acrylic acid-based monomers such as methacrylic acid; acrylic acid-based monomers such as acrylic acid; and N-substituted maleimide-based monomers such as N-phenyl maleimide can be used.

The constituting units of the SAN resin are preferably 60 to 90 mass% of the styrene-based monomer unit and 10 to 40 mass% of the vinyl cyanide-based monomer unit, more preferably 65 to 80 mass% of the styrene-based monomer unit and 20 to 35 mass% of the vinyl cyanide-based monomer unit. When the constituting units are within the above ranges, the balance between impact strength and flowability of the obtained heat resistant resin composition is superior. The content of the styrene-based monomer unit and the vinyl cyanide-based monomer unit are values measured by 13C-NMR.

As a production method of the SAN resin, a known method can be adopted. For example, the SAN resin can be produced by bulk polymerization, solution polymerization, suspension polymerization, emulsion polymerization and the like. The reaction apparatus can be operated by any of the continuous operation, batch operation, and semi-batch operation. In terms of quality and productivity, bulk polymerization and solution polymerization are preferable, and continuous operation is preferable. Examples of the solvents which can be used in bulk polymerization or solution polymerization include alkylbenzenes such as benzene, toluene, ethylbenzene and xylene; ketones such as acetone and methyl ethyl ketone; and aliphatic hydrocarbons such as hexane and cyclohexane.

In the bulk polymerization and solution polymerization of the SAN resin, a polymerization initiator and a chain transfer agent can be used, and the polymerization temperature is preferably in the range of 120 to 170°C. Examples of the polymerization initiator include peroxy ketals such as 1,1-di (t-butylperoxy) cyclohexane, 2,2-di (t-butylperoxy) butane, 2,2-di (4,4-di-t-butylperoxycyclohexyl) propane, and 1,1-di (t-amylperoxy) cyclohexane; hydroperoxides such as cumene hydroperoxide and t-butyl hydroperoxide; alkyl peroxides such as t-butyl peroxyacetate and t-amyl peroxy isononanoate; dialkyl peroxides such as t-butyl cumyl peroxide, di-t-butyl peroxide, dicumyl peroxide, and di-t-hexyl peroxide; peroxyesters such as t-butyl peroxyacetate, t-butyl peroxybenzoate and t-butylperoxy isopropyl monocarbonate; peroxy carbonates such as t-butyl peroxy isopropyl carbonate and polyether tetrakis (t-butyl peroxy carbonate); N,N'-azobis (cyclohexane-1-carbonitrile); N,N'-azobis (2-methylbutyronitrile); N,N'-azobis (2,4-dimethylvaleronitrile); and N,N'-azobis [2-(hydroxymethyl) propionitrile]. These polymerization initiators can be used alone, or two or more of these can be used in combination. Examples of the chain transfer agent include n-octyl mercaptan, n-dodecyl mercaptan, t-dodecyl mercaptan, α-methyl styrene dimer, ethyl thioglycolate, limonene, and terpinolene.

As a method for removing volatile component such as the unreacted monomer and solvent used in the solution polymerization from the solution after polymerization of the SAN resin, a known method can be adopted. For example, a vacuum devolatilization tank equipped with a pre-heater and a devolatilization extruder equipped with a vent can be used. The molten SAN resin after devolatilization is transferred to the pelletizing step. The molten copolymer is extruded into strands from a porous die, and processed into pellets by a cold cut method, an air-cooled hot cutting method or an underwater hot cutting method.

In terms of the impact resistance and molding property of the heat resistant resin composition obtained, the weight average molecular weight of the SAN resin is preferably 80000 to 150000, more preferably 90000 to 120000. The weight average molecular weight is, specifically for example, 80000, 90000, 100000, 110000, 120000, 130000, 140000, or 150000, and may be in the range between the two values exemplified herein. The weight average molecular weight of the SAN resin is a value of polystyrene equivalent measured in THF solvent by gel permeation chromatography (GPC), which was measured in a similar manner as the maleimide-based copolymer (A). The weight average molecular weight can be adjusted by the kind and amount of the chain transfer agent, the solvent concentration, the polymerization temperature, the kind and amount of polymerization initiator and the like when polymerization is performed.

The resin (B) can be prepared, for example, by using a powdered ABS resin obtained by an emulsion polymerization method and a pelletized SAN resin obtained by continuous bulk polymerization method. In addition, the resin (B) can be prepared by first melt-blending, in an extruder or the like, a powdered ABS resin obtained by emulsion polymerization method and a pelletized SAN resin obtained by continuous bulk polymerization method, thereby obtaining the resin (B) as a pelletized ABS resin.

As a production method of the heat resistant resin composition from the maleimide-based copolymer (A) and at least one resin (B) selected from the group consisting of the ABS resin, the ASA resin, the AES resin, and the SAN resin, a known method can be adopted, and a method for performing melt-kneading using an extruder is preferable. As the extruder, a known device can be used. Examples of the known device include a twin-screw extruder, a single-screw extruder, a multi-screw extruder, and a continuous kneader with biaxial rotor. The twin-screw extruder is preferably used. An intermeshing co-rotating twin-screw extruder is used widely and generally, and is further preferable.

The weight average molecular weight of the methyl ethyl ketone (MEK)-soluble component of the heat resistant resin composition is 80000 to 120000, and preferably 85000 to 105000. The weight average molecular weight is, specifically for example, 80000, 85000, 90000, 95000, 100000, 105000, 110000, 115000, or 120000, and may be in the range between the two values exemplified herein. When the weight average molecular weight is less than 80000, impact resistance is reduced. When the weight average molecular weight exceeds 120000, flowability is reduced and moldability may deteriorate. The weight average molecular weight of MEK-soluble component can be adjusted by the weight average molecular weights and the formulation ratio of the maleimide-based copolymer (A) and the resin (B). The MEK-soluble component can be obtained as follows. First, the heat resistant resin composition is dissolved in methyl ethyl ketone, and then the solution is centrifuged at 20000 rpm using a centrifuge to precipitate the insoluble component. Subsequently, the supernatant liquid is collected by decantation, and the MEK-soluble component was obtained by adding methanol to the supernatant liquid and by reprecipitation. The weight average molecular weight of the MEK-soluble component is a value of polystyrene equivalent measured in a similar manner as the maleimide-based copolymer (A).

The maleimide-based monomer unit contained in 100 mass% of the MEK soluble component of the heat resistant resin composition is 7 to 16 mass%, preferably 7 to 12 mass%. The maleimide-based monomer unit is, specifically for example, 7, 8, 9, 10, 11, 12, 13, 14, 15, or 16 mass%, and may be in the range between the two values exemplified herein.
When the maleimide-based monomer unit contained in 100 mass% of the MEK soluble component of the heat resistant resin composition is less than 7 mass%, heat resistance is insufficient. When the maleimide-based monomer unit exceeds 16 mass%, flowability is reduced and moldability may deteriorate. The maleimide-based monomer unit contained in the MEK-soluble component can be adjusted by the formulation ratio of the maleimide-based monomer unit of the maleimide-based copolymer (A) and the resin (B). The maleimide-based monomer unit contained in the MEK-soluble component is a value measured in a similar manner as the maleimide-based copolymer (A).

The acrylonitrile-based monomer unit contained in 100 mass% of the MEK-soluble component of the heat resistant resin composition is preferably 15 to 30 mass%, more preferably 18 to 22 mass%. The acrylonitrile-based monomer unit is, specifically for example, 15, 20, 21, 22, 23, 24, 25, or 30 mass%, and may be in the range between the two values exemplified herein. When the acrylonitrile-based monomer unit contained in 100 mass% of the MEK-soluble component of the heat resistant resin composition is 15 mass% or more, impact resistance and chemical resistance are excellent. When the acrylonitrile-based monomer unit is 30 mass% or less, flowability is excellent. The acrylonitrile-based monomer unit contained in the MEK-soluble component can be adjusted by the formulation ratio of the maleimide-based monomer unit of the maleimide-based copolymer (A) and the resin (B). The acrylonitrile-based monomer unit contained in the MEK-soluble component is a value measured in a similar manner as the maleimide-based copolymer (A).

The amount of the gel component contained in 100 mass% of the heat resistant resin composition is 15 to 24 mass%, preferably 16 to 21 mass%. The amount of the gel component is, specifically for example, 15, 16, 17, 18, 19, 20, 21, 22, 23, or 24 mass%, and may be in the range between the two values exemplified herein. When the amount of the gel component is less than 16 mass%, impact resistance is insufficient. When the amount of the gel component exceeds 24 mass%, flowability is reduced and moldability may deteriorate. The amount of the gel component can be adjusted by the formulation ratio of the gel component in the resin (B) and the maleimide-based copolymer (A). The amount of the gel component is calculated as follows. The heat resistant resin composition of mass W is dissolved in methyl ethyl ketone, and then the solution is centrifuged at 20000 rpm using a centrifuge to precipitate the insoluble component. Subsequently, the supernatant liquid is removed by decantation to obtain the insoluble component. From the mass S of dried insoluble component after vacuum drying, the amount of the gel component is calculated based on the formula: Amount of gel component (mass%) = (S/W) × 100.

The Vicat softening temperature of the heat resistant resin composition is preferably 110°C or higher. The Vicat softening temperature is, specifically for example, 110, 111, 112, 113, 114, 115, or 120°C, and may be in the range between the two values exemplified herein. When the Vicat softening temperature is less than 110°C, the molded article may deform under high temperature environment. The Vicat softening temperature can be adjusted by the maleimide-based monomer unit of the MEK-soluble component of the resin composition. The Vicat softening temperature is a value measured in accordance with JIS K7206, in which Method 50 (load: 50N, temperature elevation rate: 50°C/hour) was used, and the test specimen having the size of 10 mm × 10 mm and the thickness of 4 mm was used.

The melt mass flow rate of the heat resistant resin composition measured at 220°C and with a load of 98 N is preferably 15 g/10 min or higher, more preferably 18 g/10 min or higher, even more preferably 20 g/ 10 min or higher. The melt mass flow rate is, specifically for example, 15, 16, 17, 18, 19, 20, 21, 22, 23, 24, 25, or 30 g/10 min, and may be in the range between the two values exemplified herein. When the mass flow rate is within the above-mentioned range, the heat resistant resin composition has good flowability and excellent moldability. The melt mass flow rate can be adjusted by the weight average molecular weight of the MEK-soluble component of the heat resistant resin composition, the maleimide-based monomer unit of the MEK-soluble component, the gel component and the like. The melt mass flow rate is a value measured in accordance with JIS K7210.

The content of the maleimide-based copolymer (A) contained in 100 mass% of the heat resistant resin composition is preferably 10 to 27 mass%, more preferably 13 to 24 mass%, even more preferably 15 to 21 mass%. The content is, specifically for example, 10, 11, 12, 13, 14, 15, 16, 17, 18, 19, 20, 21, 22, 23, 24, 25, 26, or 27 mass%, and may be in the range between the two values exemplified herein. When the content of the maleimide-based copolymer (A) is too small, the heat resistance of the resin composition may not be sufficiently improved. When the content of the maleimide-based copolymer (A) is too large, flowability may decrease and moldability may deteriorate.

According to one embodiment, the heat resistant resin composition of the present invention preferably contains at least the ABS resin and the SAN resin.

The content of the ABS resin contained in 100 mass% of the heat resistant resin composition is more than20 mass% and 27 mass% or less, preferably more than 20 mass% and 25 mass% or less. The content is, specifically for example, 21, 22, 23, 24, 25, 26, or 27 mass%, and may be in the range between the two values exemplified herein. When the content of the ABS resin is more than 20 mass%, impact resistance is excellent. When the content of the ABS resin is 27 mass% or less, flowability is excellent.

The content of the SAN resin contained in 100 mass% of the resin composition is 56 to 69 mass%, preferably 57 to 65 mass%, more preferably 57 to 63 mass%. The content of the SAN resin is, specifically for example, 56, 57, 58, 59, 60, 61, 62, 63, 64, 65, or 69 mass%, and may be in the range between the two values exemplified herein. When the content of the SAN resin is 56 mass% or more, flowability is excellent. When the content of the SAN resin is 69 mass% or less, heat resistance is excellent.

The heat resistant resin composition may contain other components to an extent that it does not impair the effect of the present invention. Examples of other components include other resin components, a hindered phenol antioxidant, a phosphor-containing antioxidant, a radical scavenger, an impact resistance modifier, a flowability modifier, a hardness modifier, an antioxidant, an inorganic filler, a matting agent, a flame retardant, a flame retardant aid, an anti-drip agent, a sliding property imparting agent, a heat dissipating material, an electromagnetic wave absorbing material, a plasticizer, a lubricant, a mold release agent, an ultraviolet absorber, a light stabilizer, an antibacterial agent, an antifungal agent, an antistatic agent, a carbon black, a titanium oxide, a pigment, and a dye.

The heat resistant resin composition can be made into a molded article by a known molding method, and is preferred to be used for injection molding because of its excellent flowability. It is also preferred to be used for exterior and interior materials for automobiles because of its heat resistance.

### Examples

Hereinafter, detailed explanation is provided with reference to Examples.

### <Production Example of Maleimide-Based Copolymer (A-1)>

The maleimide-based copolymer (A-1) was produced in accordance with the following procedure.

65 parts by mass of styrene, 7 parts by mass of maleic anhydride, 0.35 parts by mass of 2,4-diphenyl-4-methyl-1-pentene, and 25 parts by mass of methyl ethyl ketone were charged into an autoclave having a capacity of about 120 liters equipped with an agitator, After replacing the inside of the system with nitrogen gas, the temperature was raised to 92°C, and a solution prepared by dissolving 28 parts by mass of maleic anhydride and 0.18 parts by mass of t-butylperoxy-2-ethylhexanoate in 100 parts by mass of methyl ethyl ketone was added continuously over 7 hours. After addition, 0.03 parts by mass of t-butylperoxy-2-ethylhexanoate was further added thereto. The temperature of the reaction mixture was raised to 120°C, and the reaction was carried out for 1 hour to complete polymerization. Thereafter, 32 parts by mass of aniline and 0.6 parts by mass of triethylamine were added to the polymerization solution, and reaction was carried out at 140°C for 7 hours. The imidizing reaction solution after completion of reaction was fed to a vent type screw extruder, and the volatile component was removed to obtain the pelletized maleimide-based copolymer (A-1). (A-1) contained 51 mass% of styrene unit, 48 mass% of N-phenyl maleimide unit, and 1 mass% of maleic anhydride unit. The weight average molecular weight Mw was 101000, and the glass transition temperature Tmg was 190°C.

### <Production Example of Maleimide-Based Copolymer (A-2)>

The maleimide-based copolymer (A-2) was produced in accordance with the following procedure.

65 parts by mass of styrene, 7 parts by mass of maleic anhydride, 0.2 parts by mass of 2,4-diphenyl-4-methyl-1-pentene, and 25 parts by mass of methyl ethyl ketone were charged into an autoclave having a capacity of about 120 liters equipped with an agitator, After replacing the inside of the system with nitrogen gas, the temperature was raised to 92°C, and a solution prepared by dissolving 28 parts by mass of maleic anhydride and 0.18 parts by mass of t-butylperoxy-2-ethylhexanoate in 100 parts by mass of methyl ethyl ketone was added continuously over 7 hours. After addition, 0.03 parts by mass of t-butylperoxy-2-ethylhexanoate was further added thereto. The temperature of the reaction mixture was raised to 120°C, and the reaction was carried out for 1 hour to complete polymerization. Thereafter, 32 parts by mass of aniline and 0.6 parts by mass of triethylamine were added to the polymerization solution, and reaction was carried out at 140°C for 7 hours. The imidizing reaction solution after completion of reaction was fed to a vent type screw extruder, and the volatile component was removed to obtain the pelletized maleimide-based copolymer (A-2). (A-2) contained 51 mass% of styrene unit, 48 mass% of N-phenyl maleimide unit, and 1 mass% of maleic anhydride unit. The weight average molecular weight Mw was 124000, and the glass transition temperature Tmg was 191°C.

### <Production Example of Maleimide-Based Copolymer (A-3)>

The maleimide-based copolymer (A-3) was produced in accordance with the following procedure.

42 parts by mass of styrene, 10 parts by mass of acrylonitrile, 4 parts by mass of maleic anhydride, 0.6 parts by mass of 2,4-diphenyl-4-methyl-1-pentene, and 27 parts by mass of methyl ethyl ketone were charged into an autoclave having a capacity of about 120 liters equipped with an agitator, After replacing the gaseous phase with nitrogen gas, the temperature was raised to 92°C over 40 minutes with agitation. After raising the temperature, the temperature was kept at 92°C, and a solution prepared by dissolving 21 parts by mass of maleic anhydride and 0.15 parts by mass of t-butylperoxy-2-ethylhexanoate in 85 parts by mass of methyl ethyl ketone and 20 parts by mass of styrene were added continuously over 4.5 hours. Further, after completion of the addition of maleic anhydride, a solution prepared by dissolving 0.02 parts by mass of t-butylperoxy-2-ethylhexanoate in 9 parts by mass of methyl ethyl ketone and 3 parts by mass of styrene were added continuously over 30 minutes. After addition, the temperature of the reaction mixture was raised to 120°C, and the reaction was carried out for 30 minutes to complete polymerization. Thereafter, 23 parts by mass of aniline and 0.4 parts by mass of triethylamine were added to the polymerization solution, and reaction was carried out at 140°C for 7 hours. The imidizing reaction solution after completion of reaction was fed to a vent type screw extruder, and the volatile component was removed to obtain the pelletized maleimide-based copolymer (A-3). (A-3) contained 52 mass% of styrene unit, 8 mass% of acrylonitrile unit, 39 mass% of N-phenyl maleimide unit, and 1 mass% of maleic anhydride unit. The weight average molecular weight Mw was 80000, and the glass transition temperature Tmg was 176°C.

### <Production Example of Graft ABS Resin (B-1)>

The graft ABS resin (B-1) was produced in accordance with the following procedure.

97 parts by mass of polybutadiene latex (solid concentration of 50 mass%, average particle diameter of 0.3 µm), 12 parts by mass of styrene-butadiene latex with styrene content of 24 mass% (solid concentration of 70 mass%, average particle diameter of 0.5 µm,) 1 parts by mass of sodium stearate, 0.2 parts by mass of sodium formaldehyde sulfoxylate, 0.01 parts by mass of tetrasodium ethylenediamine tetraacetic acid, 0.005 parts by mass of ferrous sulfate, and 200 parts by mass of pure water were charged into a reactor equipped with an agitator, and the temperature was raised to 50°C. 43 parts by mass of a monomer mixture of 75 mass% of styrene and 25 mass% of acrylonitrile, 0.2 parts by mass of t-dodecyl mercaptan, and 0.06 parts by mass of t-butyl peroxyacetate were dividedly added continuously over 5 hours. After dividing addition, 0.04 parts by mass of diisopropylbenzeneperoxide was added and polymerization was completed at 70°C for another 2 hours to obtain the latex of the graft ABS resin. After adding 0.3 parts by mass of Irganox 1076 (made by Ciba Specialty Chemicals, Inc) to the latex obtained, it was solidified using magnesium sulfate and sulfuric acid such that the pH of the slurry in solidification was 6.8. After washing and dehydration, the graft ABS resin (B-1) which is in powder form was obtained by drying. Based on the formulation ratio of raw materials, the content of the rubbery polymer is 57 mass%. The constituting units excluding the rubbery polymer were measured by NMR. The styrene unit was 75 mass% and the acrylonitrile unit was 25 mass%. An observation by a transmission electron microscope after the resin composition was made showed that the ABS resin was dispersed in a particle shape, with a volume average particle size of 0.4 µm.

### <SAN resin (B-2)>

The SAN resin (B-2) was produced in accordance with the following procedure.

The SAN resin was prepared by continuous bulk polymerization. One continuous stirred tank mixing vessel was used as the reactor, and polymerization was performed with a capacity of 30 L. A raw material solution containing 61 mass% of styrene, 21 mass% of acrylonitrile, and 18 mass% of ethyl benzene was prepared, and was continuously supplied to the reactor at a flow rate of 9.5 L/h. Further, t-butyl peroxy isopropyl monocarbonate as the polymerization initiator and n-dodecyl mercaptan as the chain transfer agent were continuously added to the supply line of the raw material solution so that the concentration would be 160 ppm and 1500 ppm, respectively. The reaction temperature of the reactor was adjusted to 145°C. The polymer solution taken continuously from the reactor was supplied to the vacuum devolatilization tank equipped with a pre-heater, and unreacted styrene and acrylonitrile, and ethyl benzene were removed. The temperature of the pre-heater was adjusted so that the temperature of the polymer in the devolatilization tank would be 225°C, and the pressure in the devolatilization tank was set to 0.4 kPa. The polymer was taken out from the vacuum devolatilization tank using a gear pump and was extruded into strands. The strands were cooled in cooling water and were cut to obtain the pelletized SAN resin (B-2). The constituting units of (B-2) were 75.0 mass% of styrene unit and 25.0 mass% of acrylonitrile. The weight average molecular weight was 105000.

### <SAN resin (B-3)>

The SAN resin (B-3) was produced in accordance with the following procedure.

The SAN resin was prepared by continuous bulk polymerization. One continuous stirred tank mixing vessel was used as the reactor, and polymerization was performed with a capacity of 30 L. A raw material solution containing 50 mass% of styrene, 28 mass% of acrylonitrile, and 22 mass% of ethyl benzene was prepared, and was continuously supplied to the reactor at a flow rate of 9.5 L/h. Further, t-butyl peroxy isopropyl monocarbonate as the polymerization initiator and n-dodecyl mercaptan as the chain transfer agent were continuously added to the supply line of the raw material solution so that the concentration would be 200 ppm and 1300 ppm, respectively. The reaction temperature of the reactor was adjusted to 145°C. The polymer solution taken continuously from the reactor was supplied to the vacuum devolatilization tank equipped with a pre-heater, and unreacted styrene and acrylonitrile, and ethyl benzene were removed. The temperature of the pre-heater was adjusted so that the temperature of the polymer in the devolatilization tank would be 225°C, and the pressure in the devolatilization tank was set to 0.4 kPa. The polymer was taken out from the vacuum devolatilization tank using a gear pump and was extruded into strands. The strands were cooled in cooling water and were cut to obtain the pelletized SAN resin (B-3). The constituting units of (B-3) were 67.8 mass% of styrene unit and 32.3 mass% of acrylonitrile. The weight average molecular weight was 92000.

<SAN resin (B-4)>

The SAN resin (B-4) was produced in accordance with the following procedure.

The SAN resin was prepared by continuous bulk polymerization. One continuous stirred tank mixing vessel was used as the reactor, and polymerization was performed with a capacity of 30 L. A raw material solution containing 60 mass% of styrene, 22 mass% of acrylonitrile, and 18 mass% of ethyl benzene was prepared, and was continuously supplied to the reactor at a flow rate of 9.5 L/h. Further, t-butyl peroxy isopropyl monocarbonate as the polymerization initiator and n-dodecyl mercaptan as the chain transfer agent were continuously added to the supply line of the raw material solution so that the concentration would be 160 ppm and 400 ppm, respectively. The reaction temperature of the reactor was adjusted to 145°C. The polymer solution taken continuously from the reactor was supplied to the vacuum devolatilization tank equipped with a pre-heater, and unreacted styrene and acrylonitrile, and ethyl benzene were removed. The temperature of the pre-heater was adjusted so that the temperature of the polymer in the devolatilization tank would be 235°C, and the pressure in the devolatilization tank was set to 0.4 kPa. The polymer was taken out from the vacuum devolatilization tank using a gear pump and was extruded into strands. The strands were cooled in cooling water and were cut to obtain the pelletized SAN resin (B-4). The constituting units of (B-4) were 73.5 mass% of styrene unit and 26.5 mass% of acrylonitrile. The weight average molecular weight was 146000.

### <SAN resin (B-5)>

The SAN resin (B-5) was produced in accordance with the following procedure.

The SAN resin was prepared by continuous bulk polymerization. One continuous stirred tank mixing vessel was used as the reactor, and polymerization was performed with a capacity of 30 L. A raw material solution containing 61 mass% of styrene, 21 mass% of acrylonitrile, and 18 mass% of ethyl benzene was prepared, and was continuously supplied to the reactor at a flow rate of 9.5 L/h. Further, t-butyl peroxy isopropyl monocarbonate as the polymerization initiator and n-dodecyl mercaptan as the chain transfer agent were continuously added to the supply line of the raw material solution so that the concentration would be 160 ppm and 2300 ppm, respectively. The reaction temperature of the reactor was adjusted to 145°C. The polymer solution taken continuously from the reactor was supplied to the vacuum devolatilization tank equipped with a pre-heater, and unreacted styrene and acrylonitrile, and ethyl benzene were removed. The temperature of the pre-heater was adjusted so that the temperature of the polymer in the devolatilization tank would be 225°C, and the pressure in the devolatilization tank was set to 0.4 kPa. The polymer was taken out from the vacuum devolatilization tank using a gear pump and was extruded into strands. The strands were cooled in cooling water and were cut to obtain pelletized SAN resin (B-5). The constituting unit of (B-5) was 75.0 mass% of styrene unit and 25.0 mass% of acrylonitrile. The weight average molecular weight was 81000.

### <Examples and Comparative Examples>

The maleimide-based copolymer, the ABS resin, and the SAN resin were formulated by the amounts shown in Tables 1 and 2 and were subjected to melt-kneading using the twin-screw extruder TEM-35B (made by TOSHIBA MACHINE CO., LTD, currently SHIBAURA MECHINE CO., LTD.) under the conditions shown in Tables 1 and 2, thereby obtaining the pelletized heat resistant resin composition. The screw speed of the extruder was 250 rpm, the feed amount was 30 kg/hr, and the cylinder temperature was 280°C. The melt mass flow rate, the flexural modulus, the Charpy impact strength, the Vicat softening temperature and the like of the heat resistant resin compositions obtained were evaluated by the following methods. The results are shown in Tables 1 and 2.

### (Melt Mass Flow Rate)

The melt mass flow rate was measured in accordance with JIS K7210, at 220°C and with a load of 98 N.

### (Flexural Modulus)

The flexural modulus was measured in accordance with JIS K7171, at a bending speed of 2 mm/min.

### (Charpy impact strength)

The Charpy impact strength was measured using a notched specimen in accordance with JIS K7111-1. Edgewise was adopted for the striking direction. Here, the digital impact tester made by Toyo Seiki Seisaku-sho, Ltd. was used as a measuring instrument.

### (Vicat softening temperature)

The Vicat softening temperature was measured in accordance with JIS K7206. Here, Method 50 (load: 50N, temperature elevation rate: 50°C/hour) was used, and the test specimen having the size of 10 mm × 10 mm and the thickness of 4 mm was used. The HDT & VSPT testing device made by Toyo Seiki Seisaku-sho, Ltd. was used as a measuring instrument.

### (Weight Average Molecular Weight of MEK-soluble Component)

The heat resistant resin composition is dissolved in methyl ethyl ketone, and then the solution is centrifuged at 20000 rpm using a centrifuge to precipitate the insoluble component. Subsequently, the supernatant liquid is collected by decantation, and the MEK-soluble component was collected by adding methanol to the supernatant liquid and by reprecipitation. The weight average molecular weight of the MEK-soluble component is a value of polystyrene equivalent measured by gel permeation chromatography (GPC), which is measured under the following condition.
Name of Instrument: SYSTEM-21 Shodex (made by Showa Denko K.K.)
Column: PL gel MIXED-B, 3 columns connected in series
Temperature: 40°C
Detection: differential refractive index
Eluent: tetrahydrofuran
Concentration: 2 mass%
Calibration Curve: prepared using standard polystyrene (PS) (made by Polymer Laboratories Ltd)

(Maleimide-based Monomer Unit and Vinyl Cyanide-based Monomer Unit of MEK-soluble Component)

The styrene-based monomer unit and the vinyl cyanide-based monomer unit are measured by a C-13NMR method under the following condition.
Name of Instrument: FT-NMR AVANCE300 (made by BRUKER)
Eluent: deuterated chloroform
Concentration: 14 mass%
Temperature: 27°C
Accumulation number: 8000 times

### (Gel component)

The amount of the gel component is calculated as follows. The heat resistant resin composition of mass W is dissolved in methyl ethyl ketone, and then the solution is centrifuged at 20000 rpm using a centrifuge to precipitate the insoluble component. Subsequently, the supernatant liquid is removed by decantation to obtain the insoluble component. From the mass S of dried insoluble component after vacuum drying, the amount of the gel component is calculated based on the formula: Amount of gel component (mass%) = (S/W) × 100.

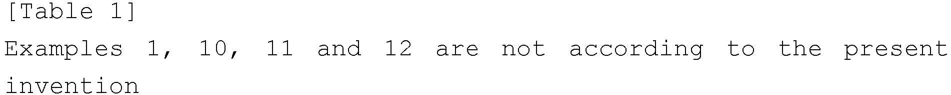

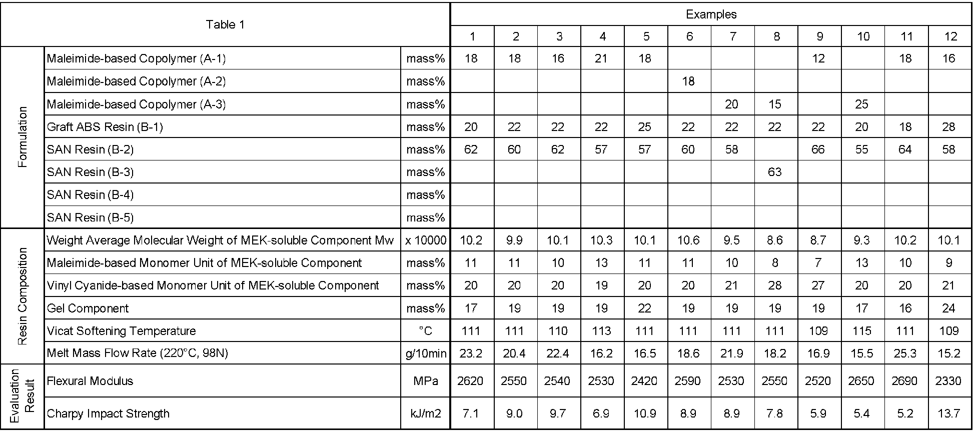

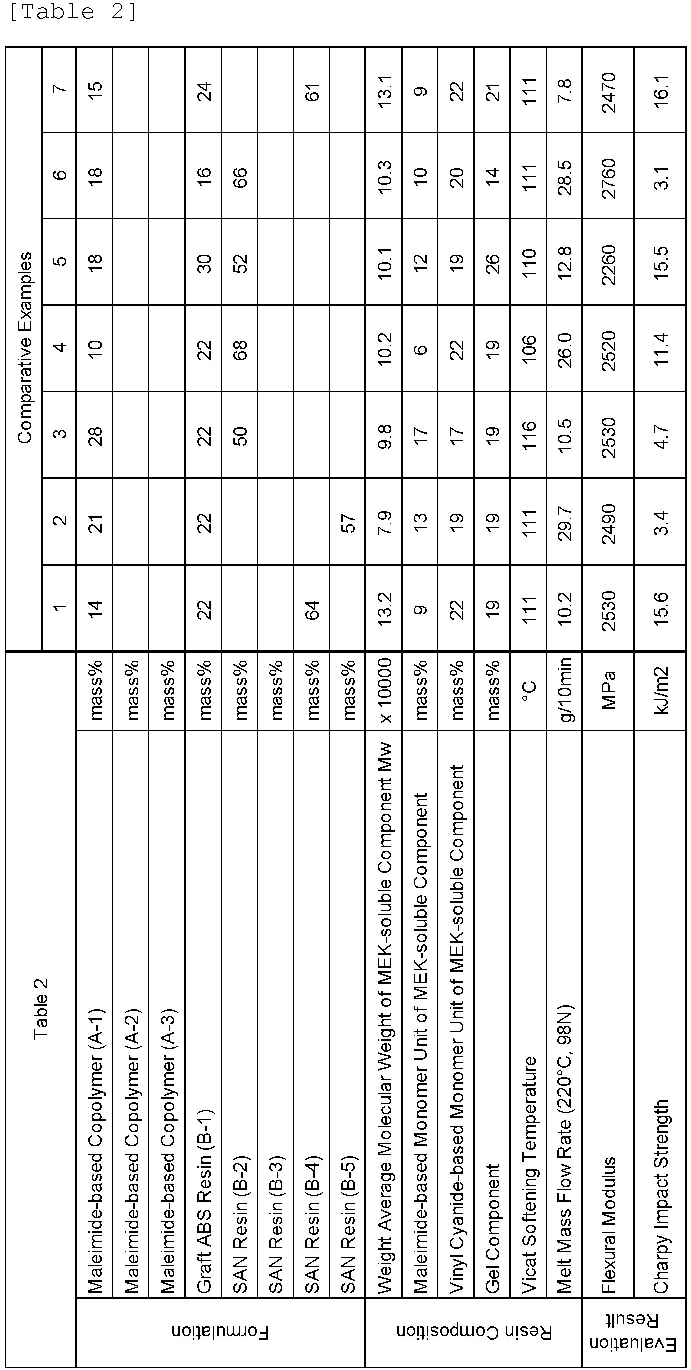

From the results shown in Tables 1 and 2, it is found that a heat resistant resin composition with excellent flowability and impact resistance while having heat resistance can be obtained by setting the weight average molecular weight of the MEK-soluble component, the maleimide-based monomer unit of the MEK-soluble component, and the amount of the gel component within appropriate ranges.

### Industrial Applicability

The present invention provides a heat resistant resin composition with excellent flowability and impact resistance while having heat resistance, enabling to obtain a large, complex or thin-walled molded article by injection molding.

## Claims

1. A heat resistant resin composition containing a maleimide-based copolymer (A) and at least one resin (B) selected from among a group consisting of an ABS resin, an ASA resin, an AES resin and a SAN resin, wherein:
a weight average molecular weight of a MEK-soluble component contained in the heat resistant resin composition is 80000 to 120000, as measured in the example section of the description;
a maleimide-based monomer unit contained in 100 mass% of the MEK-soluble component is 7 to 16 mass%, as measured in the example section of the description;
an amount of a gel component contained in 100 mass% of the heat resistant resin composition is 15 to 24 mass%, as measured in the example section of the description;
the resin (B) contains at least the ABS resin and the SAN resin; and
more than 20 mass% and 27 mass% or less of the ABS resin, 56 to 69 mass% of the SAN resin, and 10 to 27 mass% of the maleimide-based copolymer (A) are contained in 100 mass% of the heat resistant resin composition.

2. The heat resistant resin composition of Claim 1, wherein a melt mass flow rate measured at 220°C and with a load of 98 N is 15 g/10 min or higher.

3. The heat resistant resin composition of Claim 1 or 2, wherein a Vicat softening temperature, measured in accordance with JIS K7206, is 110°C or higher.

4. The heat resistant resin composition of any one of Claims 1 to 3, wherein:
the resin (B) contains at least the SAN resin;
a weight average molecular weight of the SAN resin is 90000 to 120000; and
a weight average molecular weight of the maleimide-based copolymer (A) is 80000 to 105000.

5. An injection-molded article formed from the heat resistant resin composition of any one of Claims 1 to 4.

## Patentansprüche

1. Hitzebeständige Harzzusammensetzung, umfassend ein Copolymer (A) auf Maleimidbasis und mindestens ein Harz (B), das aus einer Gruppe ausgewählt ist, die aus einem ABS-Harz, einem ASA-Harz, einem AES-Harz und einem SAN-Harz besteht, wobei:
ein gewichtsmittleres Molekulargewicht einer in der hitzebeständigen Harzzusammensetzung enthaltenen MEK-löslichen Komponente 80.000 bis 120.000 beträgt, wie im Beispielabschnitt der Beschreibung gemessen;
eine in 100 Masse-% der MEK-löslichen Komponente enthaltene Monomereinheit auf Maleimidbasis 7 bis 16 Massenprozent beträgt, wie im Beispielabschnitt der Beschreibung gemessen;
eine Menge einer in 100 Masse-% der hitzebeständigen Harzzusammensetzung enthaltenen Gelkomponente 15 bis 24 Masse-% beträgt, wie im Beispielabschnitt der Beschreibung gemessen;
das Harz (B) zumindest das ABS-Harz und das SAN-Harz enthält; und
mehr als 20 Masse-% und 27 Masse-% oder weniger des ABS-Harzes, 56 bis 69 Masse-% des SAN-Harzes und 10 bis 27 Masse-% des Copolymers (A) auf Maleimidbasis in 100 Masse-% der hitzebeständigen Harzzusammensetzung enthalten sind.

2. Hitzebeständige Harzzusammensetzung nach Anspruch 1, wobei eine bei 220°C und einer Last von 98 N gemessene Schmelze-Massefließrate 15 g/10 min oder mehr beträgt.

3. Hitzebeständige Harzzusammensetzung nach Anspruch 1 oder 2, wobei eine Vicat-Erweichungstemperatur, gemessen gemäß JIS K7206, 110 °C oder mehr beträgt.

4. Hitzebeständige Harzzusammensetzung nach einem der Ansprüche 1 bis 3, wobei:
das Harz (B) mindestens das SAN-Harz enthält;
ein gewichtsmittleres Molekulargewicht des SAN-Harzes 90.000 bis 120.000 beträgt; und
ein gewichtsmittleres Molekulargewicht des Copolymers (A) auf Maleimidbasis 80.000 bis 105.000 beträgt.

5. Spritzgegossener Artikel, der aus der hitzebeständigen Harzzusammensetzung nach einem der Ansprüche 1 bis 4 ausgebildet ist.

## Revendications

1. Composition de résine thermorésistante contenant un copolymère à base de maléimide (A) et au moins une résine (B) sélectionnée parmi un groupe constitué d'une résine ABS, d'une résine ASA, d'une résine AES et d'une résine SAN, où :
une masse moléculaire moyenne en poids d'un composant soluble dans la MEK contenue dans la composition de résine thermorésistante est de 80 000 à 120 000, comme mesuré dans la section exemple de la description ;
une unité monomère à base de maléimide contenue dans 100 % en masse du composant soluble dans la MEK est de 7 à 16 % en masse, comme mesuré dans la section exemple de la description ;
une quantité d'un composant gel contenu dans 100 % en masse de la composition de résine thermorésistante est de 15 à 24 % en masse, comme mesuré dans la section exemple de la description ;
la résine (B) contient au moins la résine ABS et la résine SAN ; et
plus de 20 % en masse et 27 % en masse ou moins de la résine ABS, 56 à 69 % en masse de la résine SAN et 10 à 27 % en masse du copolymère à base de maléimide (A) sont contenus dans 100 % en masse de la composition de résine thermorésistante.

2. Composition de résine thermorésistante selon la revendication 1, où un débit massique de matière fondue mesuré à 220 °C et avec une charge de 98 N est égal ou supérieur à 15 g/10 min.

3. Composition de résine thermorésistante selon la revendication 1 ou 2, où une température de ramollissement Vicat, mesurée conformément à la norme JIS K7206, est égale ou supérieure à 110 °C.

4. Composition de résine thermorésistante selon l'une quelconque des revendications 1 à 3, où :
la résine (B) contient au moins la résine SAN ;
une masse moléculaire moyenne en poids de la résine SAN est de 90 000 à 120 000 ; et
une masse moléculaire moyenne en poids du copolymère à base de maléimide (A) est de 80 000 à 105 000.

5. Article moulé par injection formé à partir de la composition de résine thermorésistante selon l'une quelconque des revendications 1 à 4.
